# EUROPEAN PATENT APPLICATION

(11) **EP 4 657 576 A1**
(43) Date of publication of application: **03.12.2025**
(21) Application number: 23918459.1
(22) Date of filing: 07.08.2023
(51) Int. Cl.: H01M 4/92, H01M 4/86, H01M 4/96, H01M 8/10

(54) **CATALYST-LOADED CARBON, MEMBRANE ELECTRODE ASSEMBLY USING SAME FOR POLYMER ELECTROLYTE FUEL CELLS, AND POLYMER ELECTROLYTE FUEL CELL**

(30) Priority: 23.01.2023 JP 2023008272
(71) Applicant: Ishifuku Metal Industry Co., Ltd., Chiyoda-ku, Tokyo 101-8654 (JP); TPR CO., LTD., Tokyo 100-0005 (JP)
(72) Inventor: SAKURADA,Yu, Soka-shi, Saitama 340-0002 (JP); ISHIDA, Takanobu, Soka-shi, Saitama 340-0002 (JP); KOBAYASHI,Daiki, Soka-shi, Saitama 340-0002 (JP); AOKI, Naoya, Soka-shi, Saitama 340-0002 (JP); TSUDA, Masashi, Tokyo 100-0005 (JP); SUZUKI, Yosuke, Tokyo 100-0005 (JP); KAGAMI, Sachi, Tokyo 100-0005 (JP)
(74) Representative: Kraus & Lederer PartGmbB
(86) International application number: PCT/JP2023/028724
(87) International publication number: WO 2024/157499

(57) **Abstract**

[Problem] To provide a catalyst-loaded carbon having a high initial activity and excellent durability. [Solution] A catalyst-loaded carbon including catalyst particles and a carbon support, the catalyst particles being loaded on the carbon support. The carbon support has a crystallite size of 3.5 nm or greater and 9 nm or less, a BET specific surface area of 300 m²/g or greater and 450 m²/g or less, and a pore size of 5.0 nm or greater and 20.0 nm or less. The catalyst particles are made of platinum or a platinum alloy, have a crystallite size of 2.5 nm or greater and 5.0 nm or less and a surface area of 40 m²/g or greater and 80 m²/g or less.

## Description

### Technical Field

The present invention relates to a catalyst-loaded carbon used for a fuel cell such as a polymer electrolyte fuel cell, for a water electrolyzer, and the like.

### Background Art

In recent years, polymer electrolyte fuel cells have been attracting attention as power sources for electric-powered cars and stationary power sources in response to social demand and trend based on energy and environmental issues because the polymer electrolyte fuel cells can operate at normal temperature and achieve high power density. In addition, water electrolyzers for hydrogen production also have been attracting attention. For example, a polymer electrolyte fuel cell is characterized by using an electrolyte layer made of a film-like polymer electrolyte membrane.

Typically, the polymer electrolyte fuel cell has a structure in which a plurality of single cells comprising a membrane electrode assembly (hereinafter, referred to as "MEA") sandwiched between a pair of separators is layered. The MEA has a structure in which an electrolyte layer is sandwiched by electrode catalyst layers comprising an electrode catalyst highly dispersed. The electrode catalyst layer is also called an electrode.

In the MEA, the following electrochemical reaction proceeds. First, hydrogen contained in a fuel gas fed on a fuel electrode (anode) side is oxidized by catalyst particles and becomes a proton and an electron. Then, the generated proton passes through a proton conductive electrolyte contained in the electrode catalyst layer and a polymer electrolyte membrane that is in contact with the electrode catalyst layer and reaches an electrode catalyst layer on an oxygen electrode (cathode) side. Furthermore, the electron generated in the electrode catalyst layer on the anode side passes through a conductive support comprising the electrode catalyst layer, a gas diffusion layer in contact with the electrode catalyst layer on a side different from the polymer electrolyte membrane side, a gas separator, and an external circuit, and reaches the electrode catalyst layer on the cathode side. The proton and the electron reached the electrode catalyst layer on the cathode side react with oxygen contained in an oxidant gas fed on the cathode side to form water. The fuel cell enables electricity to lead out through the electrochemical reaction described above.

In a known electrode catalyst, both of a cathode and an anode use a catalyst-loaded carbon, or the like. In the catalyst-loaded carbon, catalyst particles of platinum or a platinum alloy or the like are loaded by using as a support, carbon containing elemental carbon as a main component. As a support carbon in a catalyst-loaded carbon, a support carbon having a high specific surface area is used in many cases to load fine catalyst particles in a highly dispersed manner. By this, an electrode reaction area on catalyst particle surfaces can be made large, and adequate initial activity can be achieved with a small amount of loaded catalyst particles.

The polymer electrolyte fuel cell has issues of the life of the cell as well as the initial activity. The life of a cell is said to be 5000 hours for an automobile and 40000 hours for household use, and high power generation performance is required to be maintained for a long period of time.

However, corrosion and/or disappearance occur by electrochemical oxidation of a conductive support and catalyst particles comprising an electrode when an electrode is in a noble potential environment (approximately 0.8 V or higher) due to operation conditions of a polymer electrolyte fuel cell, such as continuous operation over a long period of time, at the time of startup, at the time of stopping, and during storage. Because portions functioning as an electrode decrease over time in this manner, the performance of the polymer electrolyte fuel cell deteriorates as a result.

Thus, various studies have been conducted for a catalyst-loaded carbon having higher initial activity and excellent durability and an MEA exhibiting power generation performance stable for a long period of time.

Patent Documents 1 and 2 each describe a catalyst-loaded carbon comprising a carbon support having a crystallite size of 1.7 nm to 1.9 nm and a specific surface area of 750 m²/g to 1000 m²/g; however, further improvement in durability has been demanded.

Patent Document 3 describes a catalyst-loaded carbon comprising a carbon support having a crystallite size of 3.5 nm or greater and a specific surface area of 50 m²/g to 250 m²/g; however, further improvement in initial activity has been demanded.

Patent Document 4 describes a highly durable catalyst-loaded carbon having a combustion temperature of 350°C or higher; however, the specific surface area is 250 m²/g or less, which is low, and further improvement in initial activity has been demanded.

### Citation List

### Patent Literature

Patent Document 1: JP 2016-146305 A
Patent Document 2: JP 2017-073357 A
Patent Document 3: JP 2016-100262 A
Patent Document 4: JP 2005-302527 A

### Summary of Invention

### Technical Problem

To improve initial activity of the catalyst-loaded carbon, a carbon support having a high specific surface area and fine catalyst particles are suitably used. Meanwhile, to improve durability, a carbon support having a large crystallite size and catalyst particles having a large particle size, which are not made fine, are suitably used. However, a large crystallite size and a high specific surface area tend to conflict with each other, and practices of a support provided with both properties in a compatible manner at a high level do not exist. Thus, an object of the present invention is to provide: a catalyst-loaded carbon having a high initial activity and excellent durability by allowing a carbon support having a large crystallite size and a high specific surface area in a compatible manner to load catalyst particles having a crystallite size in a specific range; a membrane electrode assembly using the catalyst-loaded carbon for a polymer electrolyte fuel cell; and a polymer electrolyte fuel cell.

### Solution to Problem

The present inventors produced carbon supports having specific surface areas of 300 to 450 m²/g and crystallite sizes of 3.5 nm to 9 nm by employing a dealloying process, by which a porous carbon material is produced by bringing a compound containing carbon (78 Mn - 22 C (mol%)) into contact with a molten zinc metal to perform selective elution of Mn into the molten zinc metal. The characteristic structure is a graphitized porous carbon support having a high specific surface area and a large crystallite size in a compatible manner. It is found that the issues described above are solved by allowing the carbon support to load platinum particles or platinum alloy particles having a crystallite size equal to or smaller than a mesopore size of the carbon support, and a catalyst-loaded carbon that can be used for a polymer electrolyte fuel cell or the like having a high initial activity and excellent durability, and thus completed the present invention.

That is, according to the present invention, provided are a catalyst-loaded carbon, a membrane electrode assembly in which the catalyst-loaded carbon is contained in an electrode, for a polymer electrolyte fuel cell, and a polymer electrolyte fuel cell, which have the following Aspects (1) to (10).
(1) A catalyst-loaded carbon comprising a carbon support made of a porous carbon; and
   catalyst particles made of platinum or a platinum alloy, the catalyst particles being loaded on the carbon support,
   wherein
   the carbon support of the catalyst-loaded carbon has
   a crystallite size (Lc) of 3.5 nm or greater and 9 nm or less when determined by X-ray diffraction, and
   a BET specific surface area (SSA) of 300 m²/g or greater and 450 m²/g or less, and a pore size of 5.0 nm or greater and 20.0 nm or less, measured by nitrogen adsorption measurement, and
   the catalyst particles made of platinum or a platinum alloy of the catalyst-loaded carbon have
   a crystallite size determined by X-ray diffraction of 2.5 nm or greater and 5.0 nm or less, and
   a surface area of the catalyst particles measured by CO pulse adsorption measurement of 40 m²/g to 80 m²/g.
(2) The catalyst-loaded carbon according to (1), wherein the catalyst-loaded carbon has a combustion temperature of 400°C or higher in an air atmosphere measured by differential thermal analysis, and a half-width of a combustion peak of 100°C or lower.
(3) The catalyst-loaded carbon according to (1), wherein the carbon support of the catalyst-loaded carbon has an average interplanar spacing d002 of (002) plane determined by X-ray diffraction of 0.345 nm or less.
(4) The catalyst-loaded carbon according to (2), wherein the carbon support of the catalyst-loaded carbon has an average interplanar spacing d002 of (002) plane determined by X-ray diffraction of 0.345 nm or less.
(5) The catalyst-loaded carbon according to (1), wherein the carbon support of the catalyst-loaded carbon has a peak intensity ratio (G/D) of a G band to a D band measured by Raman spectroscopy of 0.8 or greater, and a peak half-width of the G band (G-FWHM) of 40 cm⁻¹ or greater and 60 cm⁻¹ or less.
(6) The catalyst-loaded carbon according to (2), wherein the carbon support of the catalyst-loaded carbon has a peak intensity ratio (G/D) of a G band to a D band measured by Raman spectroscopy of 0.8 or greater, and a peak half-width of the G band (G-FWHM) of 40 cm⁻¹ or greater and 60 cm⁻¹ or less.
(7) The catalyst-loaded carbon according to (1), wherein the carbon support of the catalyst-loaded carbon contains an acidic functional group imparted as a surface functional group.
(8) The catalyst-loaded carbon according to (2), wherein the carbon support of the catalyst-loaded carbon contains an acidic functional group imparted as a surface functional group.
(9) A membrane electrode assembly for a polymer electrolyte fuel cell, the membrane electrode assembly comprising the catalyst-loaded carbon described in (1) in an electrode.
(10) A polymer electrolyte fuel cell comprising the catalyst-loaded carbon described in (1) in an electrode of a membrane electrode assembly.

### Advantageous Effects of Invention

By allowing the carbon support having a crystallite size and a specific surface area in a compatible manner at a high level to load catalyst particles having a specific crystallite size, the catalyst-loaded carbon of the present invention exhibits a high initial activity, is less likely to cause corrosion and disappearance of the support and elution and aggregation of the catalyst particles, and achieves excellent corrosion resistance even in a noble potential environment or in a strong acid atmosphere. Thus, a catalyst-loaded carbon having a high initial activity and excellent durability, a membrane electrode assembly using the catalyst-loaded carbon for a polymer electrolyte fuel cell, and a polymer electrolyte fuel cell can be provided.

### Brief Description of Drawings

FIG. 1 is a graph showing a relationship between a crystallite size and a specific surface area of a carbon support of a catalyst-loaded carbon produced in each of Examples and Comparative Examples.

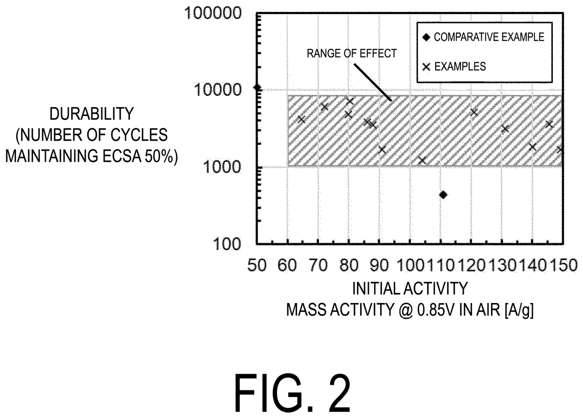

FIG. 2 is a graph showing a relationship between initial activity and durability of a catalyst-loaded carbon produced in each of Examples and Comparative Examples.

### Description of Embodiments

Next, the present invention will be described using embodiments. However, the present invention is not limited to the embodiments described below.

In the present invention, a carbon support of a catalyst-loaded carbon is required to have a crystallite size (L_{c}) determined by X-ray diffraction of 3.5 nm or greater and 9 nm or less, and a BET specific surface area (SSA) determined by the nitrogen adsorption measurement of 300 m²/g or greater and 450 m²/g or less.

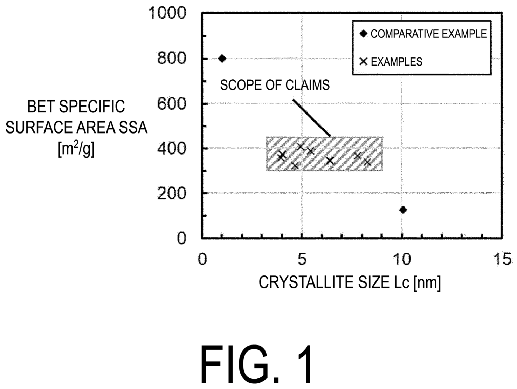

FIG. 1 shows the relationship between the crystallite size (L_{c}) and the BET specific surface area (SSA) of the carbon support of the catalyst-loaded carbon in the present invention and known technologies. The carbon support of the catalyst-loaded carbon in the present invention is a carbon support having the crystallite size (L_{c}) and the BET specific surface area (SSA) in a compatible manner at a high level, compared to known technologies.

Examples of the carbon support include carbon doped with boron, nitrogen, tungsten, aluminum, titanium, or the like.

The carbon support can be prepared as described below, for example. A compound containing carbon (78 Mn - 22 C (mol%)) is brought into contact with a molten metal at 600°C to perform a dealloying reaction, by which selective elution of Mn into the molten metal is performed. After this is maintained for 1 hour, furnace cooling is performed, and the metal component is removed from the composite containing the porous carbon and the metal component in a nitric acid aqueous solution. Then, filtration and drying are performed to produce a porous carbon. Then, graphitization treatment is performed by heating at 2000°C.

The present inventors found that a carbon support having a crystallite size (L_{c}) determined by X-ray diffraction of 3.5 nm or greater and 9 nm or less and a BET specific surface area (SSA) determined by nitrogen adsorption measurement of 300 m²/g or greater and 450 m²/g or less, and thus the crystallite size (L_{c}) and the BET specific surface area (SSA) in a compatible manner at a high level can be provided by performing graphitization treatment after a dealloying process, by which a porous carbon material is produced by bringing a compound containing carbon (78 Mn - 22 C (mol%)) into contact with a molten zinc metal to perform selective elution of Mn into the molten zinc metal. The reason for this is not necessarily clear but the present inventors presume as follows. That is, the high specific surface area and the large crystallite size are provided in a compatible manner after graphitization treatment at 2000°C by the porosity achieved by elution of Mn from the compound containing the carbon into the molten zinc metal and crystal growth due to surface diffusion of the carbon in the molten zinc metal in the dealloying process.

By setting the crystallite size (L_{c}) to 3.5 nm or greater, which is large, deterioration of the carbon support can be suppressed and high durability can be exhibited. The crystallite size (L_{c}) indicates a size originating from layering of carbon hexagonal net face. In other words, a greater L_{c} indicates that a layer structure of the carbon hexagonal net face has a greater thickness.

Corrosion and disappearance or the like of the carbon support in the electrode catalyst tend to occur from an irregular structure in a carbon hexagonal net as a starting point, and thus by increasing layers of the carbon hexagonal net, the proportion of irregular structures present in the carbon hexagonal net is preferably reduced. Furthermore, electron conductivity improves due to the large thickness of the layer structure of the carbon support, and improvement in both of the initial activity and the durability can be also expected. In another aspect, the crystallite size can be 3.7 nm or greater. Furthermore, in another aspect, the crystallite size can be 3.9 nm or greater.

In contrast, when the crystallite size is greater than 9 nm, the BET specific surface area (SSA) described below decreases, and the BET specific surface area (SSA) and the crystallite size (L_{c}) cannot be provided in a compatible manner at a high level. In another aspect, the crystallite size can be 8.5 nm or less. Furthermore, in another aspect, the crystallite size can be 8.3 nm or less.

By setting the BET specific surface area (SSA) to 300 m²/g or greater, which is high, the catalyst particles can be loaded in a highly dispersed manner, and a high initial activity can be exhibited.

The BET specific surface area (SSA) indicates an area that can load catalyst particles. In other words, a higher BET specific surface area (SSA) indicates that the catalyst particles loaded in a high density can be loaded in a more highly dispersed manner.

Typically, the catalyst-loaded carbon for a polymer electrolyte fuel cell is required to load catalyst particles in a high density of 10 mass% to 70 mass% on a carbon support. By setting the BET specific surface area (SSA) to 300 m²/g or greater, which is high, a desired loading density, especially 40 mass% or greater of catalyst particles can be loaded in a highly dispersed manner, and thus, a high initial activity can be exhibited.

In another aspect, the BET specific surface area (SSA) can be 320 m²/g or greater. Furthermore, in another aspect, the BET specific surface area (SSA) can be 340 m²/g or greater.

It became clear that corrosion and disappearance of a carbon support in an electrode catalyst tend to occur especially in a part where the carbon support and catalyst particles are in contact, and thus an electrode catalyst loading fine catalyst particles in a highly dispersed manner may have poor corrosion resistance. Thus, the BET specific surface area (SSA) of the carbon support in the electrode catalyst is preferably limited to a proper value by adjusting the dispersing condition of the catalyst particles loaded on the carbon support, or the like. That is, by setting the BET specific surface area (SSA) to 450 m²/g or less, corrosion of the carbon support can be further suppressed.

Furthermore, when the BET specific surface area (SSA) is made higher than 450 m²/g, the crystallite size (L_{c}) decreases, and the crystallite size (L_{c}) and the BET specific surface area (SSA) cannot be achieved in a compatible manner at a high level. In another aspect, the BET specific surface area (SSA) can be 430 m²/g or less. Furthermore, in another aspect, the BET specific surface area can be 410 m²/g or less.

The pore size of the catalyst-loaded carbon of the present invention is required to be 5.0 nm or greater and 20.0 nm or less, and the crystallite size of the catalyst particles in the catalyst-loaded carbon is required to be 2.5 nm or greater and 5.0 nm or less. By setting the pore size of the catalyst-loaded carbon and the crystallite size of the catalyst particles of the catalyst-loaded carbon to the ranges described above, a structure in which catalyst particles are loaded in pores of the carbon support can be formed, and a high initial activity can be exhibited.

Because the catalyst particles are loaded in pores, especially mesopores, of the carbon support, when a catalyst electrode for a fuel cell is formed, a contact area between a catalyst particle and an ionomer can be reduced. By this, for example, poisoning of the catalyst particle due to a sulfonic acid group of the ionomer can be reduced.

The pore size of the carbon support of the catalyst-loaded carbon of the present invention is calculated based on analysis by the BJH method employing adsorption isotherm measurement of a nitrogen gas. Note that "mesopore" is a pore in a size of 2.0 nm to 50.0 nm according to IUPAC; however, in the present invention, a mesopore having a pore size of 5.0 nm or greater and 20.0 nm or less is important.

When the pore size is less than 5.0 nm, the catalyst particles are not loaded in the pores and selectively loaded on a surface outside the pores, and a contact area between a catalyst particle and an ionomer cannot be reduced, and this leads to a decrease in the initial activity. On the other hand, when the pore size is greater than 20.0 nm, an ionomer goes into a pore, a contact area between a catalyst particle and the ionomer cannot be reduced, and this leads to a decrease in the initial activity. That is, the pore size of the carbon support is preferably not smaller than the crystallite size of the catalyst particles and is more preferably not less than 125% of the crystallite size of the catalyst particles. In another aspect, the pore size can be 7 nm or greater and 18 nm or less. Furthermore, in another aspect, the crystallite size can be 9 nm or greater and 16 nm or less.

The crystallite size of the catalyst particles contained in the catalyst-loaded carbon of the present invention is calculated based on the (220) plane of Pt or a Pt alloy. The crystallite size of the (220) plane of Pt or the Pt alloy can be 2.5 nm or greater and 5.0 nm or less. In another aspect, the crystallite size of the (220) plane of Pt or the Pt alloy can be 2.7 nm or greater and 4.8 nm or less. Furthermore, in another aspect, the crystallite size of the (220) plane of Pt or the Pt alloy can be 2.0 nm or greater and 4.6 nm or less.

By setting the crystallite size of the (220) plane of Pt or the Pt alloy of the catalyst particles to the range described above, initial activity and durability can be provided in a compatible manner. In a case where the crystallite size of the (220) plane of Pt or the Pt alloy is less than 2.5 nm, although improvement in the initial activity can be expected due to a high metal surface area of Pt or the Pt alloy, activity after endurance decreases due to coarsening caused by dissolution and reprecipitation of Pt, aggregation caused by movement of catalyst metal particles on a support, and the like. In a case where the crystallite size of the (220) plane of Pt or the Pt alloy is larger than 5.0 nm, the coarsening caused by dissolution and reprecipitation of Pt and the aggregation caused by movement of catalyst metal particles on a support are less likely to occur, and improvement of durability can be expected; however, a low metal surface area of Pt or the Pt alloy leads to decrease in the initial activity. Note that "metal surface area" is "surface area of catalyst particles" described below.

Note that the crystallite size of catalyst particles matches with an average particle size calculated based on a metal surface area and a loaded amount of a catalyst and an average particle size determined using an image observed by a transmission electron microscope, and the crystallite size of a catalyst means a particle size of the catalyst. That is, the particle size of the catalyst is decided based on the crystallite size of the catalyst.

The surface area of the catalyst particles made of Pt or the Pt alloy of the present invention can be 40 m²/g or greater and 80 m²/g or less.

By setting the surface area of the catalyst particles to the range described above, initial activity and durability can be provided in a compatible manner. In a case where the surface area of the catalyst particles made of Pt or the Pt alloy is greater than 80 m²/g, although improvement in the initial activity can be expected, activity after endurance decreases due to coarsening caused by dissolution and reprecipitation of Pt, aggregation caused by movement of catalyst metal particles on a support, and the like. In a case where the surface area of the catalyst particle made of Pt or the Pt alloy is less than 45 m²/g, the coarsening caused by dissolution and reprecipitation of Pt and the aggregation caused by movement of catalyst metal particles on a support are less likely to occur, and improvement of durability can be expected; however, a low metal surface area of the Pt or the Pt alloy leads to decrease in the initial activity. In another aspect, the surface area of the catalyst particles made of Pt or the Pt alloy can be 43 m²/g or greater and 75 m²/g or less. Furthermore, in another aspect, the surface area of the catalyst particles made of Pt or the Pt alloy can be 46 m²/g or greater and 70 m²/g or less.

The catalyst particles contained in the catalyst-loaded carbon of the present invention comprise platinum (Pt) or a platinum alloy as a catalyst metal, and the platinum alloy typically made of Pt and one or more types of additional metals. In this case, examples of such one or more types of additional metals forming the platinum alloy include titanium (Ti), chromium (Cr), manganese (Mn), iron (Fe), cobalt (Co), nickel (Ni), copper (Cu), gallium (Ga), yttrium (Y), zirconium (Zr), molybdenum (Mo), lanthanum (La), cerium (Ce), gadolinium (Gd), hafnium (Hf), tantalum (Ta), ruthenium (Ru), iridium (Ir), palladium (Pd), osmium (Os), and rhodium (Rh). In a case where the catalyst particles contained in the catalyst-loaded carbon of the present invention comprise the catalyst metal, an electrode catalyst having a high activity and a high durability can be provided.

The composition and the loaded density of the catalyst particles contained in the catalyst-loaded carbon can be determined by, for example, dissolving the catalyst metal contained in the catalyst particles from the catalyst-loaded carbon using aqua regia, and then determining the quantity of the catalyst metal ions in the solution by using an inductively coupled plasma (ICP) atomic emission spectroscope.

The loaded density of the catalyst particles contained in the catalyst-loaded carbon is 10 mass% or greater and 70 mass% or less, and more preferably 20 mass% or greater and 50 mass% or less. In the present invention, the loaded density of the catalyst particles means a percentage of the mass of the catalyst particles with respect to the total mass of the catalyst-loaded carbon.

By setting the loaded density of the catalyst particles to the range described above, the thickness of the electrode catalyst layer can be controlled to be suitably applied for proton transfer, gas diffusion, and draining of generated water, during electrode catalyst layer formation.

In the carbon support, the average interplanar spacing d₀₀₂ of the (002) plane determined by X-ray diffraction can be 0.345 nm or less. As the average interplanar spacing d₀₀₂ in the layering direction is closer to 0.3335 nm, which is the average interplanar spacing of graphite, the layer structure of the carbon hexagonal net is stabilized, and even when the carbon support is exposed to a high temperature in air, breakage of the structure is less likely to occur, and oxidation degradation of the carbon support can be alleviated. In another aspect, the average interplanar spacing d₀₀₂ of the (002) plane determined by X-ray diffraction can be 0.3405 nm or greater.

The carbon support can have a peak intensity ratio (G/D) of a G band to a D band measured by Raman spectroscopy of 0.8 or greater. The peak intensity ratio (G/D) of the G band to the D band indicates a proportion of edge portions exist in the carbon hexagonal net face, and a higher G/D indicates a smaller proportion of edge portions exist. The edge portion of the carbon hexagonal net is a portion that can be a starting point of oxidation degradation of the carbon support, and to alleviate the oxidation degradation of the carbon support, a small amount of the edge portions, i.e., a high G/D, is desired. In another aspect, the peak intensity ratio (G/D) of the G band to the D band measured by Raman spectroscopy can be 0.84 or greater and 2.5 or less. Furthermore, in another aspect, the peak intensity ratio (G/D) of the G band to the D band measured by Raman spectroscopy can be 0.9 or greater and 2.0 or less.

The carbon support can have a peak half-width of the G band (G-FWHM) measured by the Raman spectroscopy of 40 cm⁻¹ or greater and 60 cm⁻¹. The G-FWHM indicates a proportion of graphite, which is an ordered structure of layers of carbon hexagonal nets, to a turbostratic structure of layers of carbon hexagonal nets. A smaller G-FWHM indicates that more graphitization proceeded and a structure is closer to graphite. As the graphitization proceeds, irregular structures that can be starting points of degradation of the carbon support can be reduced, and structural uniformity can be enhanced. That is, by promoting the graphitization, oxidation degradation of the carbon support can be alleviated. In another aspect, the peak half-width of the G band (G-FWHM) measured by the Raman spectroscopy can be 41 cm⁻¹ or greater and 59 cm⁻¹ or less. Furthermore, in another aspect, the peak half-width of the G band (G-FWHM) measured by the Raman spectroscopy can be 42 cm⁻¹ or greater and 58 cm⁻¹ or less.

Note that the alleviation of the oxidation degradation and the structural uniformity can be represented by a combustion temperature of the carbon support in an air atmosphere and a half-width of a combustion peak. The combustion temperature is a temperature at which the weight of the carbon support suddenly decreases in an air atmosphere, and the half-width of the combustion peak is determined by the difference between the combustion temperature at which the weight of the carbon support starts to suddenly decrease in an air atmosphere and a combustion starting temperature at which the weight decrease starts.

The combustion temperature of the catalyst-loaded carbon in the present invention can be 400°C or higher, and the half-width of the combustion peak can be 100°C or lower. When the combustion temperature is lower than 400°C or the half-width of the combustion peak is higher than 100°C, adequate corrosion resistance cannot be ensured, and this leads to decrease in durability. In another aspect, the combustion temperature of the catalyst-loaded carbon can be 410°C or higher and 550°C or lower. Furthermore, in another aspect, the combustion temperature of the catalyst-loaded carbon can be 420°C or higher and 500°C or lower. In another aspect, the half-width of the combustion peak of the catalyst-loaded carbon can be 2°C or higher and 40°C or lower. Furthermore, in another aspect, the half-width of the combustion peak of the catalyst-loaded carbon can be 4°C or higher and 20°C or lower.

Furthermore, when an acidic functional group is imparted to the carbon support of the catalyst-loaded carbon, even higher activity can be achieved. The reason for this is not necessarily clear but the present inventors presume as follows. That is, by imparting an acidic functional group to a catalyst, the catalyst surface becomes hydrophilic. As a result, water-holding capacity of the catalyst improves, and thus proton conductivity improves.

The method of imparting an acidic functional group to a carbon support is not particularly limited, and examples thereof include a method in which carbon supports or catalyst-loaded carbons are suspended in an acidic solution and heated.

The acidic functional group amount per weight of the carbon support is not particularly limited and is preferably 1 mmol/g or greater.

The acidic functional group amount per weight of the carbon support is determined by a calculation technique based on eliminated carbon monoxide amount, carbon dioxide amount, and water amount by a thermal desorption method (temperature programmed reaction; TRP method) in a helium gas atmosphere; a calculation technique based on a peak area of C-1s peak measured by X-ray photoelectron spectroscopy (XPS); a calculation technique based on a titration amount by an acid-base titration method (Boehm method); and the like.

### Examples

The present invention will be described in detail below based on Examples and Comparative Examples. The present invention is not limited to these examples.

### Example 1

### 1. Preparation of Carbon Support

78 Mn - 22 C (mol%) was brought into contact with a molten zinc metal at 600°C for 1 hour to perform a dealloying reaction, and then furnace-cooled. To remove a metal component from a composite comprising a porous carbon and the metal component, an acid treatment was performed for 72 hours in a nitric acid aqueous solution, then filtration and drying were performed, and thus a porous carbon was produced. Then, a graphitization treatment at 2000°C was performed.

### 2. Preparation of Catalyst-Loaded Carbon

In 80.00 g of pure water, 1.00 g of carbon supports were suspended. To the resulting suspension, 8.33 g of diamminedinitroplatinum nitric acid aqueous solution containing 8.0 wt.% of platinum and 4.80 g of L-ascorbic acid were added and adequately agitated, and then the suspension was heated at 90°C for 1 hour using a reflux reactor, and thus platinum catalyst particles were loaded on carbon supports. After the temperature was allowed to decrease to room temperature, the resulting catalyst-loaded carbons were filtered and separated and dried at 60°C for 12 hours. After drying, the catalyst-loaded carbons were fired at 400°C for 1 hour in circulation of nitrogen at 50 L/min in an atmosphere furnace (B-4060, available from H.I.G.) to perform reduction of the platinum particles.

### Example 2

Platinum-loaded carbons were produced in the same manner as in Example 1 except for performing the acid treatment for 24 hours in the preparation process of the carbon supports.

### Example 3

Platinum-loaded carbons were produced in the same manner as in Example 1 except for allowing 2 hours of contact with the molten zinc metal in the preparation process of the carbon supports.

### Example 4

In 75.00 g of 0.5 mol/L nitric acid aqueous solution, 1.00 g of the platinum-loaded carbons produced in Example 3 were suspended. After the resulting suspension was adequately agitated, the suspension was heated at 80°C for 21 hours using a reflux reactor, and thus surface functional groups of the platinum-loaded carbons were adjusted. After the temperature was allowed to decrease to room temperature, the resulting platinum-loaded carbons were filtered and separated and dried at 60°C for 12 hours.

### Example 5

Platinum-loaded carbons were produced in the same manner as in Example 4 except for performing the acid treatment twice in the preparation process of the carbon supports.

### Example 6

Platinum-loaded carbons were produced in the same manner as in Example 5 except for changing the heating temperature during adjustment of the surface functional groups to 90°C in the preparation process of the platinum-loaded carbons.

### Example 7

Platinum-loaded carbons were produced in the same manner as in Example 4 except for performing the acid treatment using a hydrochloric acid aqueous solution in place of the nitric acid aqueous solution in the preparation process of the carbon supports.

### Example 8

Platinum-loaded carbons were produced in the same manner as in Example 4 except for doping the carbon with boron and nitrogen in the preparation process of the carbon supports.

### Example 9

Platinum-loaded carbons were produced in the same manner as in Example 4 except for changing the temperature of the molten zinc metal to 650°C in the preparation process of the carbon supports.

### Example 10

Platinum-loaded carbons were produced in the same manner as in Example 6 except for changing the temperature of the molten zinc metal to 680°C in the preparation process of the carbon supports.

### Example 11

Platinum-loaded carbons were produced in the same manner as in Example 6 except for changing the firing temperature to 250°C in the preparation process of the catalyst-loaded carbons.

### Example 12

Platinum-loaded carbons were produced in the same manner as in Example 6 except for changing the firing temperature to 1000°C in the preparation process of the catalyst-loaded carbons.

### Example 13

In 1.00 g of the platinum-loaded carbons produced in Example 6, 0.50 g of cobalt nitrate hexahydrate and 1.0 g of pure water were added and kneaded, and thus a platinum-cobalt-loaded carbon slurry was produced. The resulting slurry was dried at 60°C for 12 hours and fired at 800°C for 1 hour in circulation of 4.0% hydrogen/nitrogen at 50 L/min, and thus platinum-cobalt alloy-loaded carbon powder was produced. In 15.00 g of 1.0 mol/L nitric acid aqueous solution, 1.00 g of the resulting platinum-cobalt alloy-loaded carbon powder was suspended. After the resulting suspension was adequately agitated, the suspension was heated at 90°C for 1 hour using a reflux reactor, excessive cobalt that was not alloyed with the platinum was removed, and thus surface functional group tuning of the carbon supports was performed. After the temperature was allowed to decrease to room temperature, the resulting platinum-cobalt alloy-loaded carbons were filtered and separated and dried at 60°C for 12 hours. Thus, platinum-cobalt alloy-loaded carbons were produced.

### Comparative Examples

### Comparative Example 1

Platinum-loaded carbons were produced in the same manner as in Example 1 except for using Ketjenblack (EC300J, available from Lion Corporation) as the carbon supports.

### Comparative Example 2

Platinum-loaded carbons were produced in the same manner as in Example 1 except for changing the graphitization treatment temperature to 2800°C in the preparation process of the carbon supports.

The following physical property evaluations were performed for a carbon support of each of the catalyst-loaded carbons of Examples and Comparative Examples, catalyst particles of each of the catalyst-loaded carbons, and each of the catalyst-loaded carbons. The results are shown in Table 1.

### Measurement of BET Specific Surface Area of Carbon Support of Catalyst-Loaded Carbon

For the BET specific surface area (m²/g), approximately 50 mg of a sample (carbon supports) was weighed and dried in vacuum at 300°C for 4 hours. A nitrogen adsorption isotherm was measured for the resulting dried sample by a gas adsorption method using a nitrogen gas with an automatic specific surface area analyzer (3Flex, available from Micromeritics Instrument Corporation). The specific surface area was determined by a multipoint method based on the BET method.

### Measurement of Pore Size of Carbon Support of Catalyst-Loaded Carbon

For the pore size (nm), approximately 50 mg of a sample (carbon supports) was weighed and dried in vacuum at 300°C for 4 hours. A nitrogen adsorption isotherm was measured for the resulting dried sample by a gas adsorption method using a nitrogen gas with an automatic specific surface area analyzer (3Flex, available from Micromeritics Instrument Corporation). The pore size was determined by a modal pore size in a pore size distribution curve provided using non-graphite carbon as a standard isotherm in a micropore distribution analysis method based on the BJH method.

### Measurement of Crystallite Size L_{C} of Carbon Support of Catalyst-Loaded Carbon, and Interplanar Spacing d₀₀₂

For the crystallite size Lc and the interplanar spacing d₀₀₂, an XRD pattern of the carbon support was taken in the following measurement conditions by using an X-ray diffractometer (MiniFlex 600, available from Rigaku) using a CuKα radiation as a radiation source. The resulting XRD pattern was analyzed by using an integrated powder X-ray diffraction analysis software (PDXL2, available from Rigaku), and the L_{C} and the d₀₀₂ were determined based on a peak of C(002) plane around 26°.

### XRD Measurement Condition

Radiation source: CuKα (line focus); wavelength: 1.541836 Å
Operation axis: 2θ/θ; measurement method: continuous; counting unit: cps
Angle at start: 10.0°; angle at end: 90.0°; cumulative number: 1
Sampling width: 0.02°; scanning speed: 1°/min
Voltage: 40 kV; electric current: 15 mA
Incident parallel slit: Soller 2.5°; length limiting slit: 10 mm
Light receiving slit: Soller 2.5°; light receiving slit: 13 mm
Offset angle: 0°
Goniometer radius: 150 mm; optical system: focusing
Slit: slit for D/teX Ultra
Detector: D/teX Ultra 250
Ni-Kβ filter: 0.03 mm

### Measurement of Crystallite Size of Catalyst Particles of Catalyst-Loaded Carbon

The crystallite size of the catalyst particles was determined as follows: An XRD pattern of the catalyst-loaded carbon was taken in the following measurement conditions by using an X-ray diffractometer (SmartLab, available from Rigaku) using a CuKα radiation as a radiation source. The resulting XRD pattern was analyzed by using an integrated powder X-ray diffraction analysis software (PDXL, available from Rigaku), and the crystallite size was determined based on a peak of Pt(220) plane around 67.5°.

### XRD Measurement Condition

Radiation source: CuKα (line focus); wavelength: 1.541836 Å
Operation axis: 2θ/θ; measurement method: continuous; counting unit: cps
Angle at start: 10.0°; angle at end: 90.0°; cumulative number: 1
Sampling width: 0.01°; scanning speed: 4°/min
Voltage: 40 kV; electric current: 30 mA
Incident parallel slit: Soller 5.0°; length limiting slit: 10 mm
Light receiving slit: Soller 5.0°; light receiving slit: 20 mm
Offset angle: 0°
Goniometer radius: 300 mm; optical system: focusing
Slit: slit for D/teX Ultra
Detector: D/teX Ultra 250
Ni-Kβ filter: none

### Measurement of Surface Area and Particle Size of Catalyst Particles of Catalyst-Loaded Carbon

For the surface area of the catalyst particles, approximately 20 mg of a sample (catalyst-loaded carbons) was weighed and subjected to pretreatment in hydrogen circulation at 130°C for 1 hour, and then subjected to measurement by a pulse method using a carbon monoxide gas with a metal dispersion rate analyzer (BELMETAL 3, available from MicrotracBEL Corp.). The surface area and the catalyst particle size of the catalyst particles was determined by the adsorbed amount of the carbon monoxide.

### Measurement of Combustion Temperature of Catalyst-Loaded Carbon and Combustion Peak Half-Width

For the combustion temperature of the catalyst-loaded carbons, a DTA-TG pattern of the catalyst-loaded carbon was taken by measurement in an air atmosphere using a differential thermal analyzer (Thermoplus EVO 2, available from Rigaku) at a temperature increase condition of 2.0°C/min. The temperature at which d(TG)/d(T), the resulting TG pattern being differentiated with respect to the temperature, became smallest was defined as the combustion temperature, and thus the combustion temperature was determined. Note that TG represents a weight reduction ratio and T represents temperature. Furthermore, a temperature that was 1/10 of the smallest value of d(TG)/d(T) was defined as a combustion starting temperature, and the half-width of the combustion peak was calculated as: combustion peak half-width = combustion temperature - combustion starting temperature.

### Measurement of G/D Ratio of Carbon Support of Catalyst-Loaded Carbon

For the G/D ratio that was the peak intensity ratio of G band to the D band of the carbon supports of the catalyst-loaded carbons and the peak half-width G-FWHM of the G band, a Raman spectrum of the carbon supports was taken by using a Raman spectrometer (inVia Raman microscope, available from Renishaw plc.). The resulting Raman spectrum was subjected to Raman analysis by using an analysis software (WiRE 4.3, available from Renishaw plc.), and the peak intensity of the G band and the half-width were determined based on a peak around Raman shift of 1570 cm⁻¹. Furthermore, the peak intensity of the D band was determined based on a peak around Raman shift of 1340 cm⁻¹, and thus the G/D ratio was calculated.

### Raman Spectroscopy Measurement Condition

Excitation laser wavelength: 532 nm
Exposure time: 10 sec
Laser power: 0.6 mW
Cumulative number: 3

| | Physical properties of support | | | | | | Physical properties of catalyst particles | | Physical properties of catalyst-loaded carbon | |
|---|---|---|---|---|---|---|---|---|---|---|
| | SSA [m²/g] | Pore size [nm] | L_{c} [nm] | d₀₀₂ [nm] | G/D ratio | G-FWHM [cm⁻¹] | Crystallite size [nm] | SSA [m²/g] | Combustion temperature [°C] | Combustion peak half-width [°C] |
| Example 1 | 358 | 11.5 | 3.94 | 0.343 | 1.39 | 51.1 | 3.2 | 68 | 436 | 7 |
| Example 2 | 407 | 11.4 | 4.92 | 0.343 | 1.70 | 46.8 | 3.1 | 66 | 423 | 62 |
| Example 3 | 373 | 11.4 | 4.04 | 0.345 | 0.92 | 57.0 | 3.1 | 65 | 434 | 8 |
| Example 4 | 373 | 11.4 | 4.04 | 0.345 | 0.92 | 57.0 | 3.1 | 65 | 432 | 9 |
| Example 5 | 345 | 11.5 | 6.41 | 0.342 | 1.17 | 42.3 | 3.1 | 64 | 441 | 5 |
| Example 6 | 345 | 11.5 | 6.41 | 0.342 | 1.17 | 42.3 | 3.1 | 69 | 445 | 6 |
| Example 7 | 366 | 11.5 | 7.78 | 0.344 | 1.07 | 46.1 | 3.1 | 54 | 436 | 5 |
| Example 8 | 322 | 12.4 | 4.64 | 0.342 | 0.84 | 52.0 | 3.7 | 59 | 425 | 98 |
| Example 9 | 390 | 12.4 | 5.42 | 0.344 | 0.87 | 54.7 | 3.2 | 67 | 427 | 6 |
| Example 10 | 338 | 11.5 | 8.26 | 0.343 | 0.88 | 47.2 | 3.1 | 69 | 439 | 4 |
| Example 11 | 345 | 11.5 | 6.41 | 0.342 | 1.17 | 42.3 | 2.6 | 68 | 414 | 8 |
| Example 12 | 345 | 11.5 | 6.41 | 0.342 | 1.17 | 42.3 | 4.5 | 50 | 458 | 4 |
| Example 13 | 345 | 11.5 | 6.41 | 0.342 | 1.17 | 42.3 | 3.6 | 47 | 444 | 3 |
| Comparative Example 1 | 800 | 81.9 | 1.2 | 0.356 | 0.84 | 93.8 | 2.4 | 75 | 325 | 165 |
| Comparative Example 2 | 126 | 15.9 | 10.1 | 0.340 | 4.5 | 28.5 | 5.2 | 41 | 467 | 8 |

In Example 1 to Example 13, all of the catalyst-loaded carbons each had the BET specific surface area of the carbon support of 300 m²/g or greater and 450 m²/g or less, and pore properties including the mesopores in a size of 5.0 nm or greater and 20.0 nm or less. Furthermore, all of the catalyst-loaded carbons were carbon supports in which graphitization proceeded and which had high structural uniformity, because the crystallite size L_{c} of the carbon support was 3.5 nm or greater and 9 nm or less, and the low d₀₀₂, the high G/D ratio, and the low G-FWHM were exhibited. Furthermore, the combustion temperatures of the catalyst-loaded carbons were 400°C or higher and the half-widths of the combustion peak were 100°C or lower, and thus oxidation degradation of the carbon supports was alleviated.

In Comparative Example 1, the BET specific surface area of the carbon support was 300 m²/g or greater, which was high. On the other hand, the crystallite size L_{c} of the carbon support was 3.5 nm or less. Furthermore, the combustion temperature of the catalyst-loaded carbon was 400°C or lower, which was low, and thus oxidation degradation of the carbon supports was not alleviated.

In Comparative Example 2, although the carbon supports had mesopores, the BET specific surface area was 300 m²/g or less. Furthermore, because the crystallite size L_{c} of the carbon support was 3.5 nm or greater, and the low d₀₀₂, the high G/D ratio, and the high G-FWHM were exhibited, it was a carbon support, in which graphitization proceeded and which had high structural uniformity. Furthermore, the combustion temperature of the catalyst-loaded carbon was 400°C or higher and the half-width of the combustion peak was 100°C or lower, and thus oxidation degradation of the carbon supports was alleviated.

For each of the catalyst-loaded carbons of Examples and Comparative Examples, a membrane electrode assembly for single cell evaluation of a polymer electrolyte fuel cell was prepared by the following method.

### 1. Preparation of Electrode

Using a planetary ball mill, 0.75 g of each of the catalyst-loaded carbons of Examples and Comparative Examples, 2.20 g of pure water, 2.20 g of an ionomer (Nafion DE2020CS, available from Chemours), 2.60 mL of 2-propanol (available from FUJIFILM Wako Pure Chemical Corporation), 2.00 mL of 1-propanol (available from FUJIFILM Wako Pure Chemical Corporation), and 0.50 mL of ethylene glycol (available from FUJIFILM Wako Pure Chemical Corporation) were mixed and dispersed for 1 hour and then degassed for 5 minutes by a mixer, and thus a cathode catalyst slurry was formed. This electrode catalyst slurry was applied on one face of a PTFE sheet (NAFLON (trade name) sheet, available from NICHIAS Corporation; thickness: 200 µm) using a doctor blade and dried in vacuum at 120°C for 60 minutes, and thus a cathode catalyst layer was formed on a PTFE sheet.

Using a planetary ball mill, 0.75 g of FC-I2 (IFPC40-II, available from ISHIFUKU Metal Industry Co., Ltd.) that is a reference catalyst of Research Division of Catalysis for Fuel Cells of Catalysis Society of Japan, 5.40 g of pure water, 2.20 g of an ionomer (Nafion DE2020CS, available from Chemours), 3.50 mL of 2-propanol (available from FUJIFILM Wako Pure Chemical Corporation), 2.70 mL of 1-propanol (available from FUJIFILM Wako Pure Chemical Corporation), and 0.50 mL of ethylene glycol (available from FUJIFILM Wako Pure Chemical Corporation) were mixed and dispersed for 1 hour and then degassed for 5 minutes by a mixer, and thus an anode catalyst slurry was formed. This electrode catalyst slurry was applied on one face of a PTFE sheet (NAFLON (trade name) sheet, available from NICHIAS Corporation; thickness: 200 µm) using a doctor blade and dried in vacuum at 120°C for 60 minutes, and thus an anode catalyst layer was formed on a PTFE sheet.

### 2. Preparation of MEA

The two sheets of electrode catalyst layer-formed PTFE sheets that were prepared as described above were layered sandwiching a polymer electrolyte membrane (Nafion NR-211, available from Chemours; 200 mm × 200 mm square) in a manner that sides on which the electrode catalyst layers were formed were facing inside, and then hot-pressed at 130°C and at a pressure of 1.5 kN using a precision heating and pressure device (CYPM, Sintokogio, Ltd.) for 10 minutes. After cooling, only the PTFE sheets were released, and thus an assembly in which the electrode catalyst layers were transferred to the polymer electrolyte membrane was produced. At this time, the transfer rate of the electrode catalyst layers from the PTFE sheets to the polymer electrolyte was 100%, and the platinum weight per 1 cm² area of one face of the electrode catalyst layer on the polymer electrolyte membrane was 0.30 mg.

Then, the assembly prepared as described above was sandwiched using two sheets of gas diffusion layers (GDL 28BC, available from SGL; 100 mm × 100 mm square), then a sealing material (NAFLON (trade name) sheet, available from NICHIAS Corporation; laminate of a thickness of 150 µm and a thickness of 80 µm) were arranged on a peripheral part of the electrode catalyst layers and the gas diffusion layers, and thus an MEA was formed.

Thereafter, on the prepared MEA, a current collector provided with a gold-plated gas flow pass was arranged and fastened by being sandwiched by end plates made of stainless steel in a manner that a predetermined surface pressure was achieved, and thus a single cell of a polymer electrolyte fuel cell was produced.

For the MEA using each of the catalyst-loaded carbons of Examples and Comparative Examples, the following power generation evaluations were performed. The results are shown in Table 2.

### Measurement of Initial Activity of MEA Using Catalyst-Loaded Carbon

I-V measurement described in "Cell Evaluation and Analysis Protocol (December, 2012)" that is a publication of New Energy and Industrial Technology Development Organization (NEDO) was performed by using a fuel cell power generation evaluation device (available from Chino Corporation) and an electronic load device (PLZ164WA, available from Kikusui Electronics Corp.). The mass activity was calculated based on the electric current density at 0.85 V and the loaded amount of platinum, and thus the initial activity was determined.

### Measurement of Durability of MEA Using Catalyst-Loaded Carbon

A durability test in which degradation of a carbon support of a catalyst-loaded carbon was accelerated was performed in accordance with an electric potential cycle (operation stop) test method described in "Cell Evaluation and Analysis Protocol (December, 2012)" that is a publication of New Energy and Industrial Technology Development Organization (NEDO) by using a fuel cell power generation evaluation device (available from Chino Corporation) and a potentio-galvanostat (PGSTAT128N, available from Metrohm AG). The number of electric potential cycles at which electrochemical effective surface area ECSA became 50% of the value before the electric potential cycle (operation stop) test was calculated, and thus the durability was determined.

| | Initial activity Mass activity @ 0.85V in Air [A/g] | Durability Number of cycles maintaining ECSA 50% [cycle] |
|---|---|---|
| Example 1 | 86 | 3853 |
| Example 2 | 88 | 3516 |
| Example 3 | 64 | 4174 |
| Example 4 | 80 | 4812 |
| Example 5 | 121 | 5085 |
| Example 6 | 131 | 3143 |
| Example 7 | 104 | 1233 |
| Example 8 | 72 | 6072 |
| Example 9 | 140 | 1840 |
| Example 10 | 91 | 1700 |
| Example 11 | 149 | 1702 |
| Example 12 | 80 | 7178 |
| Example 13 | 145 | 3583 |
| Comparative Example 1 | 111 | 442 |
| Comparative Example 2 | 50 | 10927 |

In each of Example 1 to Example 13, because the crystallite size (L_{c}) was 3.5 nm or greater and 9 nm or less, the BET specific surface area (SSA) determined by the nitrogen adsorption measurement was 300 m²/g or greater and 450 m²/g or less, and the crystallite size and the BET specific surface area were provided in a compatible manner at a high level, a membrane electrode assembly having the high initial activity, where the mass activity was 60 A/g or greater, and the number of cycles maintaining ECSA 50% of 1000 times or greater that was three or more times that of known technologies, and the excellent durability was produced.

In Comparative Example 1, because the crystallite size was 3.5 nm or less, which was small, while the BET specific surface area (SSA) determined by the nitrogen adsorption measurement was 300 m²/g or greater, a membrane electrode assembly having the number of cycles maintaining ECSA 50% of 500 or less and the low durability while having the high initial activity, where the mass activity was 60 A/g or greater, was produced.

In Comparative Example 2, while the crystallite size was 3.5 nm or greater, which was large, the BET specific surface area (SSA) determined by the nitrogen adsorption measurement was 300 m²/g or less that was low, and thus a membrane electrode assembly having the low initial activity, where the mass activity was 50 A/g or less, while having the number of cycles maintaining ECSA 50% of 10000 times or greater and the excellent durability, was produced.

### Industrial Applicability

The catalyst-loaded carbon according to the present disclosure can alleviate oxidation degradation of the carbon support in an air atmosphere, has a high initial activity, and excellent durability. Thus, the catalyst-loaded carbon according to the present disclosure can be used as an electrode catalyst for a membrane electrode assembly for a polymer electrolyte fuel cell.

## Claims

1. A catalyst-loaded carbon comprising:
a carbon support made of a porous carbon; and
catalyst particles made of platinum or a platinum alloy, the catalyst particles being loaded on the carbon support,
wherein
the carbon support of the catalyst-loaded carbon has
a crystallite size (L_{c}) determined by X-ray diffraction of 3.5 nm or greater and 9 nm or less, and
a BET specific surface area (SSA) measured by nitrogen adsorption measurement of 300 m²/g or greater and 450 m²/g or less, and a pore size of 5.0 nm or greater and 20.0 nm or less, and
the catalyst particles made of platinum or a platinum alloy of the catalyst-loaded carbon have
a crystallite size determined by X-ray diffraction of 2.5 nm or greater and 5.0 nm or less, and
a surface area of the catalyst particles measured by CO pulse adsorption measurement of 40 m²/g to 80 m²/g.

2. The catalyst-loaded carbon according to claim 1, wherein the catalyst-loaded carbon has a combustion temperature of 400°C or higher in an air atmosphere measured by differential thermal analysis, and
a half-width of a combustion peak of 100°C or lower.

3. The catalyst-loaded carbon according to claim 1, wherein the carbon support of the catalyst-loaded carbon has an average interplanar spacing d₀₀₂ of (002) plane determined by X-ray diffraction of 0.345 nm or less.

4. The catalyst-loaded carbon according to claim 2, wherein the carbon support of the catalyst-loaded carbon has an average interplanar spacing d₀₀₂ of (002) plane determined by X-ray diffraction of 0.345 nm or less.

5. The catalyst-loaded carbon according to claim 1, wherein the carbon support of the catalyst-loaded carbon has a peak intensity ratio (G/D) of a G band to a D band measured by Raman spectroscopy of 0.8 or greater, and a peak half-width of the G band (G-FWHM) of 40 cm⁻¹ or greater and 60 cm⁻¹ or less.

6. The catalyst-loaded carbon according to claim 2, wherein the carbon support of the catalyst-loaded carbon has a peak intensity ratio (G/D) of a G band to a D band measured by Raman spectroscopy of 0.8 or greater, and a peak half-width of the G band (G-FWHM) of 40 cm⁻¹ or greater and 60 cm⁻¹ or less.

7. The catalyst-loaded carbon according to claim 1, wherein the carbon support of the catalyst-loaded carbon contains an acidic functional group imparted as a surface functional group.

8. The catalyst-loaded carbon according to claim 2, wherein the carbon support of the catalyst-loaded carbon contains an acidic functional group imparted as a surface functional group.

9. A membrane electrode assembly for a polymer electrolyte fuel cell, the membrane electrode assembly comprising the catalyst-loaded carbon described in claim 1 in an electrode.

10. A polymer electrolyte fuel cell comprising the catalyst-loaded carbon described in claim 1 in an electrode of a membrane electrode assembly.
